# EUROPEAN PATENT APPLICATION

(11) **EP 2 446 734 A1**
(43) Date of publication of application: **02.05.2012**
(21) Application number: 11187150.5
(22) Date of filing: 28.10.2011
(51) Int. Cl.: A01G 1/04

(54) **Cutivating of mushrooms**

(30) Priority: 02.11.2010 NL 2005617
(71) Applicant: Agriculture Research & Development B.V., 5966 PJ America (NL)
(72) Inventor: Verdellen, Jacobus Henricus Johannes, 5962 PA Melderslo (NL)
(74) Representative: Algemeen Octrooi- en Merkenbureau

(57) **Abstract**

The present invention relates to mushroom cultivation and provides an apparatus that optimizes the growth process. As a consequence yield per unit area is increased. Mushroom growth has been studied during centuries. Many species of mushrooms seemingly appear overnight, growing or expanding rapidly. In actuality all species of mushrooms take several days to form primordial mushroom fruit bodies, though they do expand rapidly by the absorption of fluids.

## Description

### TECHNICAL FIELD OF THE INVENTION

The present invention relates to mushroom cultivation and provides an apparatus that optimizes the growth process. As a consequence yield per unit area is increased. In addition, the present invention relates to a method for harvesting mushrooms,

### BACKGROUND OF THE INVENTION

Mushroom growth has been studied during centuries. Many species of mushrooms seemingly appear overnight, growing or expanding rapidly. Actually, all species of mushrooms take several days to form primordial mushroom fruit bodies, though they do expand rapidly by the absorption of fluids.

Most mushrooms that are sold in supermarkets have been commercially grown on mushroom farms. The most popular of these, *Agaricus bisporus,* is generally considered safe for most people to eat because it is grown in controlled, sterilized environments, though some individuals do not tolerate it well. Several varieties of A. *bisporus* are grown commercially, including whites, criminy, and portobello. Other cultivated species now available at many grocers include shiitake, maitake or hen-of-the-woods, oyster, and enoki.

White mushrooms, like all mushrooms, grow from microscopic spores, not seeds. Plant-like organisms growing from spores are called fungi.

Because mushrooms have no chlorophyll, they must get all their nutrients from organic matter in their growing medium. The medium-called compost is scientifically formulated of various materials such as straw, corn cobs, cotton seed and cocoa seed hulls, gypsum and nitrogen supplements. Preparing the compost takes one to two weeks. Then it is pasteurized and placed in large trays or beds.

Next the spawn is worked into the compost and the growing takes place in specially constructed houses, where the farmers can regulate crucial aspects as heat and humidity.

In two to three weeks, the compost becomes filled with the root structure of the mushroom, a network of lacy white filaments called mycelium. At that point, a layer of pasteurized peat moss is spread over the compost. The temperature of the compost and the humidity of the room must be carefully controlled in order for the mycelium to develop fully. Eventually, tiny white protrusions form on the mycelium and push up through the surface of the peat moss. Farmers call this pinning. The pins continue to grow, becoming the mushroom caps, which are actually the fruit of the plant, just as a tomato is the fruit of a tomato plant. It takes 10 to 25 days to produce mature mushrooms after the peat moss is applied. Size is no indication of maturity in mushrooms. Perfectly ripe ones vary from small buttons to large caps.

Each crop is harvested over a period of several weeks. Typically two or three crops are harvested. Then the compost does not generate enough crop anymore; it may be regarded as "exhausted". Then the container (tray or bed) is emptied and steam-sterilized before the process begins again. Harvested mushrooms are set in carts, refrigerated and then packaged and shipped quickly to supermarkets, food processors and restaurants. The entire process from the time the farmer starts preparing the compost until the mushrooms are harvested and shipped to market takes about two to three months.

Edible mushrooms are used extensively in cooking, in many cuisines (notably Chinese, European, and Japanese). Hundreds of million of kilograms are produced yearly. Various species are mentioned below. In principle the present invention is applicable for growth of any type of mushrooms, of which the following are examples. Criminy mushrooms are grown and harvested in the same manner as the white mushroom. Porta bella mushrooms are also grown in a manner similar to the white mushrooms. Oyster mushrooms, like other mushrooms, are grown in mushroom houses but they require a bit more humidity and fresh air than the white variety. Shiitake mushrooms were originally cultivated on natural oak logs, a process which took two to four years before the mycelium colonized the wood sufficiently to produce fruiting. Now, however, oak sawdust is packed into poly bags, sterilized, inoculated with spawn and placed in environmentally controlled rooms. For Enoki mushrooms, beach mushrooms and maitake mushrooms even more complex procedures are used, requiring specific control of e.g. temperature, carbon dioxide content, and humidity, as well as specific specially prepared substrate material.

The main cost involved in the production of mushrooms includes compost production, energy consumption during mushroom growing, mushroom harvesting and mushroom packaging. The harvesting of mushroom is still done manually. In addition to basic procedures, mushroom farmers use their own techniques to make the process convenient, but still it is very laborious, time consuming and expensive in terms of production cost. Thus, the involvement of manual labour increases the production cost and also increases the chances of potential contamination. This creates additional maintenance problems.

Considerable effort has been made to reduce the costs involved in production it self, but less attention has been paid towards reducing costs in harvesting, reducing energy consumption and in optimizing yield in terms of kilogram mushroom per unit area.

US 1,773,648 relates to a process for mushroom culture wherein the mushrooms are grown in a mushroom house. Said mushroom house has to be kept at a low temperature and a fan is present within the mushroom house to provide active ventilation on the outside surfaces of the mushroom beds or trays. The disadvantage of such a system is that only the outside surfaces of the mushroom beds are cooled and that the outside room temperature must be approximately 10 degrees cooler than the desired temperature inside the mushroom beds to achieve the desired internal temperature. This is a energy inefficient (and hence costly) and slow process.

WO 92/09192 discloses a process for cultivating mushrooms wherein vertical ventilation passages are provided in the substrate to provide passive ventilation. This method is not practical since it is very difficult to fill a mushroom bed with compost if a large number of such vertical ventilation passages are present. Moreover, it would be almost impossible to empty the beds after use. In addition, the passive ventilation provides a very slow process that does not provide the required internal temperature in the substrate beds. This will lead to a limited mushroom yield.

Thus, disadvantages of the prior art method are amongst others limited yield in terms of kilograms mushroom per unit area and in terms of kilogram mushrooms per unit compost and a large energy consumption, which is undesirable from both a environmental and financial point of view.

Thus there still is a need for improved methods and tools for harvesting mushrooms, which methods and tools overcome one or more of the above disadvantages, while at the same time not jeopardizing other favourable aspects of harvesting.

### SUMMARY OF THE INVENTION

The present invention relates to an apparatus for harvesting mushrooms, comprising
a container, which container comprises
a first layer, comprising substrate, such as compost,
a second covering layer, preferably comprising pasteurized material, such as peat,
a means for actively providing a gas, preferably air, to said first and/or second layer,
wherein said means comprise a fan and one or more ducts, which one or more ducts are in communication with the fan and the first and/or second layer.

The present invention provides an improved control of temperature in the first and/or second layer. One or more ducts are provided within the tray or bed, embedded in the substrate and/or the covering layer. By providing gas through these embedded ducts the temperature of said substrate and/or the covering layer is controlled in a direct and precise manner.

Moreover, the present invention relates to a method for harvesting mushrooms, comprising the steps of:
i) providing a container, which container comprises:
   a) a first layer, comprising substrate, such as compost,
   b) a second covering layer, preferably comprising pasteurized material, such as peat,
ii)) providing means for actively providing a gas, preferably air, to said first and/or second layer, wherein said means comprise a fan and one or more ducts, which one or more ducts are in communication with the fan and the first and/or second layer;
ill) providing a gas, preferably air, to said first and/or second layer.

Thus the present method provides a cheap and fast method of harvesting, and increased yields.

Thus, the present invention solves various problems of the prior art and further provides significant advantages.

### DETAILED DESCRIPTION OF THE INVENTION

In a first aspect the present invention relates to an apparatus for harvesting mushrooms, comprising
a container, which container comprises
a first layer, comprising substrate, such as compost,
a second covering layer, preferably comprising pasteurized material, such as peat,
a means for actively providing a gas, preferably air, to said first and/or second layer,
wherein said means comprise a fan and one or more ducts, which one or more ducts are in communication with the fan and the first and/or second layer.

With fan is meant a means for actively moving gas around. This can also be a pump or ventilator or any other means of actively moving gas. An example of a commercially available fan that would be suitable for the present invention is the Multifan CH2F30, optionally combined with a Multifan controller. However, other fans, pumps and ventilators may be used. The fan may also be a fan, or equivalently suction system, already being present in a room for harvesting mushrooms. Typically a simple connection, such as a duct, e.g. a hose or the like, may be sufficient to connect the present apparatus with the fan being present. The term "fan" therefore relates to any means capable of providing gas at a sufficient quantity and at a sufficient pressure, such as over-pressure or under-pressure.

With communication is meant that the one or more ducts are coupled or connected to the fan either directly or via additional pipes or ducts or other means known to a person skilled in the art.

The term "mushroom" is used herein to refer to any type of mushroom, specifically edible and medicinal mushrooms. The term therefore includes the most familiar cultivated mushroom, *Agaricus bisporus,* and also includes other types of mushrooms, such as oyster mushrooms, criminy mushrooms, portobello mushrooms and shiitake mushrooms, just to mention a few. The *Agaricus bisporus* is the most important mushroom in terms of units of production. A preferred embodiment of the present invention is therefore specifically applicable to *Agaricus bisporus.*

The substrate (first layer) may be spread out through a large production unit (i.e. tray or bed), as in prior art methods. Nowadays the substrate typically comprises one or more layers, typically a compost layer and a peat layer on top thereof, though some of the above mentioned mushrooms require specific other substrates and configurations. However, any other type of substrate is envisaged, as long as the substrate is capable of producing mushrooms. The substrate is added to the container.

The growth conditions are typically comparable to prior art methods. When mushrooms have reached a required size or age the containers can be harvested, either by hand or automatically.

When the mushrooms are harvested they can be stored in a cooled environment, or shipped. When the mushrooms have been harvested these are preferably directly shipped and placed on the market, being as fresh as possible. The present apparatus provides such direct action.

Advantages of the present invention will be cited below.

For example, the temperature of the first and/or second layer can be brought to a required temperature within a few hours, sometimes even within an hour by providing a gas. If the temperature of the substrate and/or the covering layer is too high, a cooled gas can be used. If the temperature of the substrate and/or the covering layer is too low, a heated gas can be used.

The prior art methods of harvesting control the temperature by changing/maintaining temperature of the direct environment of a container, such as of a mushroom farm house. In the prior art methods a climate control apparatus is present within the mushroom farm house. A fan is present to circulate the air throughout the mushroom farm house and around the bottom, sides and top of the mushroom harvesting beds or trays. However, since the substrate and the covering layer have a significant thickness of approximately 20-25 cm, the transfer of heat/cold from the surrounding air into the substrate and/or the covering layer is slow. It hence may take days to reach the desired temperature. If may also be possible that local hot spots occur within the substrate and/or the covering layer of the prior art systems, which is detrimental to the yield of mushrooms. This is solved by the method and apparatus of the present invention. The present invention provides an improved control of temperature in the first and/or second layer.

The present invention moreover, provides an improved control of oxygen concentration in the first and/or second layer. By providing gas through said one or more ducts the oxygen concentration in the first and/or second layer is controlled in a directly and precise manner, such as to about 19-23% relative pressure. As such growth of mushrooms can be controlled very precisely, e.g. start and stop of growth of mushrooms. This is beneficial to the yield of the mushrooms.

The present invention moreover, provides an improved control of relative humidity in the first and/or second layer to preferably about 50-95% RH. By providing gas having a certain humidity through the ducts the relative humidity of said first and/or second layer is controlled in a direct and precise manner.

The prior art methods of harvesting control relative humidity by changing/maintaining the relative humidity of the direct environment of a container (i.e. a tray or bed for growing mushrooms), such as a mushroom farm house. In the prior art methods a climate control apparatus is present within the mushroom farm house. A fan is present to circulate the air throughout the mushroom farm house and around the bottom, sides and top of the mushroom harvesting beds or trays. However, since the substrate and the covering layer have a significant thickness of approximately 20-25 cm, the transfer of humidity from the surrounding air into the substrate and/or the covering layer is slow. It hence may take days to reach the desired level of humidity, if ever. This is solved by the method and apparatus of the present invention. The present invention provides an improved control of humidity in the first and/or second layer.

Furthermore, the relative humidity of the direct environment is controlled in an improved way as well, typically much lower than 100%, such as lower than 90% RH. Even further, in prior art methods of harvesting change of temperature, specifically lowering thereof, may have as a consequence that the temperature will reach the dew point, and only after removing water the temperature can be lowered further. The present invention solves the problem of unwanted condensation in farm houses. Further, by controlling relative humidity better, also undesired detrimental fungi are controlled better.

The present invention provides a quicker first yield of mushrooms. The first yield can now be harvested 2-5 days earlier. Such increases throughput time significantly. The reason for this increase in speed of harvesting is due to the fact that the mushroom spawn, pin and ripen more quickly since the direct surroundings of the fungus (i.e. the substrate and/or covering layer) is regulated at an optimal temperature, oxygen level and humidity. These factors increase the speed growth of the mushroom.

The present invention also provides a quicker second and/or third yield of mushrooms. The second and/or third yield can now be harvested 2-5 days earlier. Such increases throughput time significantly.

The present invention provides an improved quality of mushrooms. Mushrooms can be harvested having less stem and more cap. This further increases the average weight per mushroom, typically by 10% or more. This has large commercial benefits.

Another benefit of the present invention is that the method and apparatus of the present invention provides an improved, i.e. decreased, consumption of energy. By directly controlling temperature and/or relative humidity of the first and/or second layer less energy is needed to obtain and maintain a required temperature. The consumption of energy is decreased by 5-25% depending on the precise growth conditions, type of mushroom. As a consequence of the present apparatus the temperature of the environment, e.g. a farm house, becomes less critical. Therefore a further decrease in energy consumption is obtained, of again some 5%-25%, relative to prior art methods. In the prior art methods, the complete mushroom farm house needed to be maintained at a certain temperature, whereas by the present invention, the temperature of the surrounding air may even higher than the temperature of the gas in the ducts and in the trays or beds. Without wishing to be bound to a theory, the present inventor has estimated that an energy saving of up to 80 % should possible with the present apparatus and method.

The present invention provides an improved filling of the container, specifically of the covering layer. The covering layer may comprise more material, thereby increasing production and yield of mushrooms. The provision of a thicker layer in the growing trays or beds was not possible with prior art methods, since this would impair the control of temperature, oxygen level and/or humidity in the substrate to such a level that the yield of mushrooms would be insufficient.

The present invention provides a better and more direct control of mushroom growth. Not only can start and stop of growth be controlled [by adjusting the local temperature, oxygen level and/or humidity within the trays or beds], but also speed of growth. The temperature of first and/or second layer can be lowered, thereby stopping growth or slowing down growth, or increased, thereby starting or speeding up growth. Such stopping growth or slowing down growth, or starting or speeding up growth can be achieved within 72 hours, typically within 24 hours, such as within 6 hours, depending on various parameters.

Further, the present invention provides improved control of temperature and humidity of layers used. Such is also favourable for mushroom growth. Temperature and humidity are amongst others due to the construction of the present application better controlled and more stable. Temperature can e.g. be controlled within ±0.1 °C, such as 18 ± 0.1 °C or 24 ± 0.1 °C. Further, it is very easy to adapt humidity by spraying or dripping of liquid, e.g. water. It has been found that spraying or dripping can be stopped when a bottom side starts showing droplets on a surface area thereof. A further advantage is that humidity or liquid can easily enter and leave the present apparatus.

The present invention will significantly reduce the cost of mushroom production by improving the process of harvesting and increasing the yield of mushrooms per unit volume of compost used. The yield in terms of kg mushroom per unit volume of compost is increased by 1/3 (e.g. from 30 kg/m² to 40 kg/m², or 10-33% extra), compared to prior art methods. As a consequence the costs of harvesting, e.g. with respect to material costs and energy, are reduced by 10%-33%, most likely by 20% or more.

For the present method, the present mushroom farm houses and equipment can be used. There is no need for significant investment in additional equipment. The method of the present invention requires ducts, a gas driving means, such as a fan or ventilator and coupling thereof to a air climate control system, such as an air conditioning unit.

In an embodiment, the amount of gas supplied by the fan may be between 200 and 3000 m³/h, preferably between 300 and 1000 m³/h, for example 500 m³/h.

In an embodiment, the gas pressure is between 100 and 1000 Pa, preferably between 250 and 750 Pa, for example 500 Pa. This is considered relatively low, but more than sufficient for the objective of the present invention. Further, a low pressure prevents the fan from pulsating, which is considered disadvantageous, energy consuming and disruptive.

Moreover, preferably the present apparatus also comprises a controller coupled to said fan. In addition, preferably the apparatus also comprises a computer or the like, and optionally one or more temperature sensors, and optionally one or more relative humidity sensor, wherein the temperature and/or humidity sensors are placed in relevant areas.

In an embodiment, the present invention provides one or more side ducts coupled to said main duct in order to obtain a more even distributed temperature and relative humidity.

In an embodiment, the present invention relates to an apparatus wherein the one or more ducts further comprise one or more releases, which one or more releases are located in the first and/or second layer.

By providing one or more releases gas can be delivered much more accurately in the first and/or second layer, providing the above advantages.

In an embodiment, the present invention relates to an apparatus wherein the one or more releases are chosen from the group consisting openings, membranes, and combinations thereof, which membranes are permeable to the gas.

Openings are relatively easy to provide, whereas membranes are somewhat more complicated. In view of durability membranes are slightly preferred since they are less likely to be clogged, whereas in terms of initial costs openings are preferred. Both openings and membranes will provide the benefits of the present invention.

In the present invention a membrane relates to a layer of material which serves as a selective barrier between two phases (e.g. two gas phases) and remains impermeable to specific particles, molecules, or substances when exposed to the action of a driving force. Some components are allowed passage by the membrane into a permeate stream, whereas others are retained by it and accumulate in the retentate stream.

Membranes can be of various thickness, with homogeneous or heterogeneous structure. A membrane can also be classified according to their pore diameter. According to IUPAC, there are three different types of pore size (diameter dp) classifications: microporous (dp < 2nm), mesoporous (2nm < dp < 50nm) and macroporous (dp > 50nm). Membranes can be neutral or charged, and particles transport can be active or passive. The latter can be facilitated by pressure, concentration, chemical or electrical gradients of the membrane process. Membranes can be generally classified into three groups: inorganic, polymeric or biological membranes. These three types of membranes differ significantly in their structure and functionality.

A synthetic membrane can be fabricated from a large number of different materials. It can be made from organic or inorganic materials including solids such as metal or ceramic, homogenous films (polymers), heterogeneous solids (polymeric mixes, mixed glasses), and liquids. A liquid membrane refers to a synthetic membrane made of non-rigid material.

Polymeric membranes lead the membrane separation industry market because they are very competitive in performance and economics. Many polymers are available, but the choice of membrane polymer is not a trivial task. A polymer preferably has appropriate characteristics for an intended application. A polymer sometimes has to offer a low binding affinity for separated molecules (as in the case of biotechnology applications), and has to withstand harsh cleaning conditions. Preferably it is compatible with chosen membrane fabrication technology. A polymer preferably is a suitable membrane former in terms of its chains rigidity, chain interactions, stereoregularity, and polarity of its functional groups. Polymers can form amorphous and semi crystalline structures (can also have different glass transition temperatures), affecting the membrane performance characteristics. A polymer is preferably obtainable and reasonably priced to comply with low cost criteria of a membrane separation process. Many membrane polymers are grafted, custom-modified, or produced as copolymers to improve their properties. The most common polymers in membrane synthesis are cellulose acetates, nitrates, and esters (CA, CN, and CE), polysulfone (PS), polyether sulfone(PES), polyacrilonitrile (PAN), polyamide, polyimide, polyethylene and polypropylene (PE and PP), polytetrafluoroethylene (PTFE), polyvinylidene fluoride (PVDF), polyvinylchloride (PVC). It is noted that various synthetic materials are to some extend poisonous to mushrooms. Mushrooms exposed to contaminants released from said materials will die. Therefore the person skilled in the art will choose materials not or hardly being poisonous to mushrooms.

Synthetic membranes can be also categorized based on their structure (morphology). Three such types of synthetic membranes are commonly used in separation industry: dense membranes, porous membranes, and asymmetric membranes.

There is some controversy in defining a "membrane pore". The most commonly used (and presently used) theory assumes a cylindrical pore for simplicity. This model assumes that pores have the shape of parallel, nonintersecting cylindrical capillaries. In reality a typical pore is a random network of unevenly shaped structures of different sizes.

There are two main flow configurations of membrane processes: cross-flow and dead-end filtrations. In cross-flow filtration a feed flow is tangential to the surface of membrane, retentate is removed from a same side further downstream, whereas a permeate flow is tracked on another side. In dead-end filtration a direction of the fluid flow is normal to a membrane surface. In the present application both cross-flow and dead-end flow filtration is used, preferably dead-end flow is used. Both flow geometries offer some advantages and disadvantages. Dead-end membranes are relatively easy to fabricate which reduces cost of a separation process. A dead-end membrane separation process is easy to implement and the process is usually cheaper than cross-flow membrane filtration. A dead-end filtration process is usually a batch-type process, where the filtering solution is loaded (or slowly fed) into membrane device, which then allows passage of some particles subject to the driving force. A main disadvantage of a dead end filtration is extensive membrane fouling and concentration polarization. The fouling is usually induced faster at a higher driving forces. Membrane fouling and particle retention in a feed solution also builds up a concentration gradients and particle backflow (concentration polarization). Tangential flow devices are more cost and labour intensive, but they are less susceptible to fouling due to sweeping effects and high shear rates of a passing flow. Most commonly used synthetic membrane devices (modules) are flat plates, spiral wounds, and hollow fibers.

A selection of synthetic membranes for a targeted separation process is usually based on few requirements. Membranes have to provide enough mass transfer area to process large amounts of feed stream. The selected membrane preferably has high selectivity (rejection) properties for certain particles; it resists fouling and has a high mechanical stability. It also preferably is reproducible and has low manufacturing costs. The main modelling equation for the dead-end filtration at constant pressure drop is represented by Darcy's law.

In an embodiment, the present invention relates to an apparatus wherein the one or more releases are substantially distributed evenly in space in the first and/or in the second layer.

By distributing releases substantially evenly an improved control is obtained, e.g. in terms of temperature and directness. The above advantages are as a consequence obtained as well.

The length or height (h) of a mushroom growth tray is preferably between 0.7 and 2, more preferably between 1.0 and 1.4 meters, more preferably approximately 1.2 meters. The width (w) of a mushroom growth tray is preferably between 2 and 5, more preferably between 2.5 and 4 meters, more preferably approximately 3 meters. Each bed has a surface area that can be calculated by width multiplied by height (w x h).

In an embodiment the present invention provides second layer has a wherein the second layer has a surface area of between 0.5 m² and 250 m², preferably between 1 m² and 100 m², more preferably between 3 m² and 25 m², such as 5 or 6 m². The surface area is taken as the area where mushrooms grow and are harvested. It has been found that these areas are optimized in terms of yield, ease of access, ability to handle, ease or ability to fill and empty a tray, etc. A too large tray is difficult to access, and is therefore not preferred. A too small tray is too laborious, and does not yield enough mushrooms.

The thickness of the first layer comprising substrate (also called inner layer) is preferably between 5 and 25 centimetre, more preferably between 8 and 15 centimetre, more preferably 10 centimetre. The thickness of the second covering layer (also called outer layer) is preferably between 5 and 25 centimetre, more preferably between 8 and 20 centimetre, more preferably between 10 and 15 centime, even more preferably 12 centimetre.

Optionally the second covering layer may be further provided with a gaze. The trays of bed generally have a rectangular shape.

In an embodiment, the present invention relates to an apparatus wherein 1-25 releases is/are present per meter duct, preferably 2-20 per meter duct, such as 10 per meter duct. By providing many releases a better control, e.g. in terms of temperature etc. is obtained. One release per meter duct is sufficient, but control is somewhat difficult, whereas 25 releases per meter indicate a control per 4 cm duct. Such is sufficient. The present inventor has found that ten releases functions optimal.

In an embodiment, the present invention relates to an apparatus wherein the duct comprises one or more central ducts and/or one or more side ducts, preferably 0.5-10 central ducts per meter, more preferably 1-5 central ducts per meter, such as 2 ducts per meter. Preferably various side ducts are present. As such a direct environment of a duct is provided with gas and controlled.

Even further, in an embodiment of the invention the side ducts have secondary side ducts. As such a network of ducts is obtained, providing the above advantages.

In an embodiment, side ducts extend outwards from main ducts towards a side of a tray. Both the side ducts and main ducts are in the same horizontal plane. Preferably, the remaining space between two neighbouring ducts is at least about 5 cm.

In an embodiment, main ducts have a diameter of 5-20 cm, preferably about 10 cm. In an embodiment, side ducts have a diameter of 2-10 cm, preferably about 5 cm. In an embodiment, secondary side ducts have a diameter of 1-10 cm, preferably about 4 cm. As such volume occupied by ducts is not too large and control is optimized. With diameter of the ducts the inner diameter is meant.

In an embodiment the present invention relates to an apparatus comprising preferably 5-25 side ducts per meter central duct, more preferably 8-20 side ducts per meter central duct, such as 10 side ducts per meter central duct.

In an embodiment the present invention relates to an apparatus wherein the one or more openings have a cross section of 0.1 mm - 10 mm, preferably from 0.3 mm - 5 mm, such as from 1 mm - 3 mm. Openings of smaller than 0.1 mm increase pressure built up in ducts, which is undesirable and less effective. Openings of larger than 10 mm have an increased risk of becoming clogged and thereby release of gas is limited. Preferably openings are not too large and not too small.

In an embodiment the present invention relates to an apparatus wherein one or more membranes have a cross section of 0.1 mm - 10 mm, preferably from 0.3 mm - 5 mm, such as from 1 mm - 3 mm.

Typically the yield of mushrooms is calculated per unit area, i.e. as kilograms per square meter. The total yield is calculated by combining the sub yields from several harvest on the same bed or tray (i.e. a total of three harvests).

Gas is in an example provided in intervals (optionally regulated by a controller, and optionally the interval period is based on data obtained by one or more temperature and/or humidity sensors. In an embodiment, the time period between intervals ranges from 2 minutes to 4 hours. The duration of gas provision can ranges for example from 1 to 60 minutes, preferably between 5 and 30 minutes, more preferably between 10 and 20 minutes, for example 15 minutes.

In an embodiment, a so-called HQ timer-01 was used as a controller. However, each timer that is capable of operating the fan (or ventilator or pump) in intervals can be used.

An example of a ventilation protocol can be as follows: in the first few days after filling the trays air was provided twice per hour, during a period of about 15 minutes each. The following days, air was provided once per four hours, during a period of about 15 minutes each. In this period fruiting bodies could form. This ventilation frequency was maintained until harvesting began. After a first yield or harvest was obtained, air was provided once per two hours, during a period of about 15 minutes each. The frequency decreased to about once per hour. The advantages obtained hereby were amongst others a decrease of energy consumption compared to prior art methods (which relate to cooling a room) with 50%. Further, also temperature control was affected in 50% of the time of prior art methods, i.e. two times as fast. This indicates a direct control of temperature, and as a consequence, growth conditions.

In an embodiment the present invention relates to an apparatus wherein ducts are substantially formed of a membrane and/or suitable ceramics, such as for more than 50%, or more than 70%, or even more than 90%. Thereby ducts can release gas very efficiently and in a controlled manner to the first and/or second layer. In an example ducts, such as side ducts, may be formed completely of a material allowing gas to pas, such as a membrane of ceramics.

In an embodiment the present invention relates to an apparatus wherein the one or more membranes have a pore diameter suitable for gas penetration, such as from 0.1 nm - 50 nm, preferably from 1 nm - 20 nm. For gas a pore diameter of 0.1 nm will limit larger molecules and atoms from entering. A diameter of 50 nm allows a relative large flows of gas and still limits flow of other particles through the membrane sufficiently.

Further, release diameters and/or membrane pore diameters may vary, in order to provide an optimal pressure built up and gas release towards the first and second layer. In an example release diameters are somewhat larger in an area wherein a means for providing gas is located compared to end of ducts, e.g. comparable to a blood vessel system in a human being.

In a second aspect the present invention relates to a method for harvesting mushrooms, comprising the steps of
providing a container comprising a first layer, comprising substrate, such as compost, a second covering layer, preferably comprising pasteurized material, such as peat,
providing a gas, preferably air, to said first and/or second layer.

In a third aspect the present invention relates to a method for harvesting mushrooms, wherein one or more of temperature, oxygen pressure, relative humidity of first and/or second layer, start of mushroom growth, end of mushroom growth, use of energy, growth of mushrooms, and moment of harvesting is controlled by providing a gas, preferably air, to said first and/or second layer.

Both methods provide for the above advantages.

In an example further conducts are provided for keeping humidity at a desired level. Water is fed through these further conducts, and provided to the layers in a controlled manner, such as by dripping.

In an example in the method the mushrooms are selected from the group comprising *Agaricus Bisporus,* oyster mushroom, crimini mushroom, portobello mushroom, shiitake mushroom, maitake mushroom, cantharellales mushroom, and enoki.

The invention is further detailed by the accompanying figures and examples, which are exemplary and explanatory of nature and are not limiting the scope of the invention. To the person skilled in the art it may be clear that many variants, being obvious or not, may be conceivable falling within the scope of protection, defined by the present claims. Examples of the invention may be combined.

### DESCRIPTION OF THE DRAWINGS / FIGURES

The invention although described in detailed explanatory context may be best understood in conjunction with the accompanying figures and photographs.
Fig. 1 shows a cross-section of an apparatus according to the prior art.
Fig. 2 shows a cross-section of an apparatus according to the invention.
Fig. 3 shows a cross-section of an apparatus according to the invention.
Fig. 4 shows a detail of a cross-section of an apparatus according to the invention.
Fig. 5 shows a cross-section of an apparatus according to the invention.
Fig. 6 shows part of an apparatus according to the invention.

### DETAILED DESCRIPTION OF THE DRAWINGS

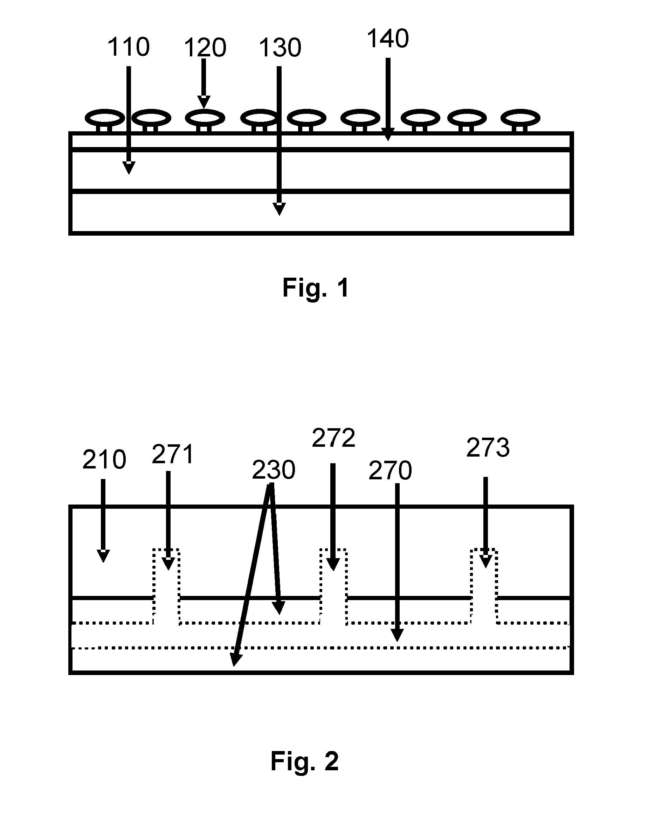

Fig. 1 shows a cross-section of an apparatus according to the prior art. Mushrooms (120) are grown on an outer layer (110). The outer layer has a surface area. In the example each surface has a certain width (w) and height (h), providing a surface area (w x h). Further an inner layer (130) and an optional gaze (140) is shown. The example shown has a total surface area of about 5.4 m². The size of the tray shown is somewhat larger, e.g. about 3 meter by 1.2 meter. The thickness of the inner layer is about 10 cm, whereas the thickness of the outer layer is about 12 cm.

Figure 2 shows a cross-section of an embodiment of the apparatus according to the invention. Therein mushrooms are grown on an outside layer (viz. second covering layer) (210). The outside layer may be covered with a gaze (not shown). The inner layer (viz. first substrate layer) comprising compost (230) is further shown. The apparatus relates to a rectangular tray. Further, (side) ducts (271, 272, 273) are shown and a further central or main duct (270) is shown. The main duct 270 and side ducts 271, 272, and 273 are shown by a dotted line (not intended to mean porous ducts). The main duct 270 has three side ducts coupled thereto. Side ducts 271, 272, and 273 each protrude into second covering layer 120 (in case peat). There are several openings in the side ducts (not shown) through which moist air can circulate into the first and second layers. The main duct is coupled to a fan (not shown).

In the set-up of figure 2 a first yield of 24 kg mushrooms was obtained (fist harvest), a second yield of 16 kg (second harvest) and a third yield of 8 kg (third harvest), whereas prior art apparatuses provide yields of 18 kg, 12 kg, and 5 kg respectively. Therefore, the presence of gas ducts according to the present apparatus has increased the yield with 6 kg, 4 kg, and 3 kg respectively, without using more compost or covering layer. In other words, the total yield has increased from some 35 kg to 48 kg.

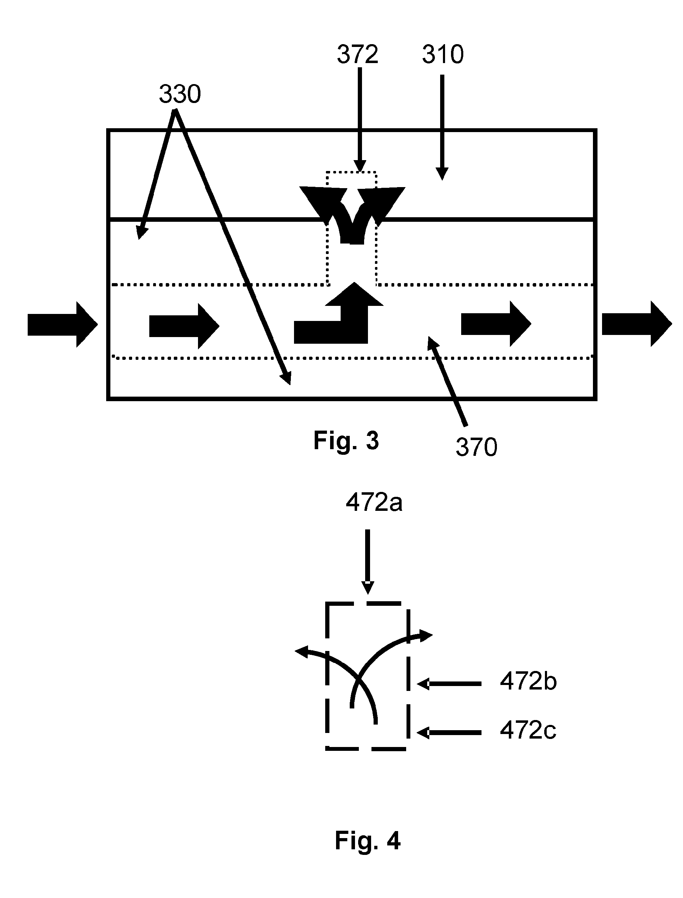

Figure 3 shows a cross-section of another embodiment of the apparatus according to the invention. In figure 3 an inner layer (first layer) of compost (330) and an outer layer (second covering layer) of peat (310) is shown. Further a main duct (370) for transporting gas is present. In the case that air is used as gas, the air is provided at a certain temperature in order to maintain optimal growth conditions. Also the humidity of the compost and peat can be regulated. Typically this set-up also involves a pump or fan, a controller, typically also a computer or the like, one or more temperature sensors, one or more relative humidity sensor, wherein sensors are placed in relevant areas. Further, a side ducts (373) is provided, in order to obtain a more even distributed temperature and relative humidity. The main duct has a diameter of about 10 cm, the side ducts of about 5 cm. Air is provided in intervals from 2 minutes - 4 hours long. The flow of air is shown by thick black arrows in Figure 3.

In the present example a HQ timer-01 was used as a controller. In the first few days after filling the trays with compost and peat air was provided twice per hour, during a period of about 15 minutes each. Air was provided in order to maintain the temperature at about 18 °C. Thereafter air was provided once per four hours, during a period of about 15 minutes each. In this period fruiting bodies could form. This frequency was maintained until harvesting began. After a first yield air was provided once per two hours, during a period of about 15 minutes each. The frequency decreased to about once per hour. The advantages obtained hereby were amongst others a decrease of energy consumption compared to prior art methods (which relate to cooling a room) with 50%. Further, also temperature control was affected in 50% of the time of prior art methods, i.e. two times as fast. This indicates a direct control of temperature, and as a consequence, growth conditions.

Figure 4 shows a cross-section of side duct (472) according to the invention. The side duct comprises releases (472a, 472b, 472c). The releases may be openings or may be membranes. Openings uses have a diameter of about 0.8 cm.

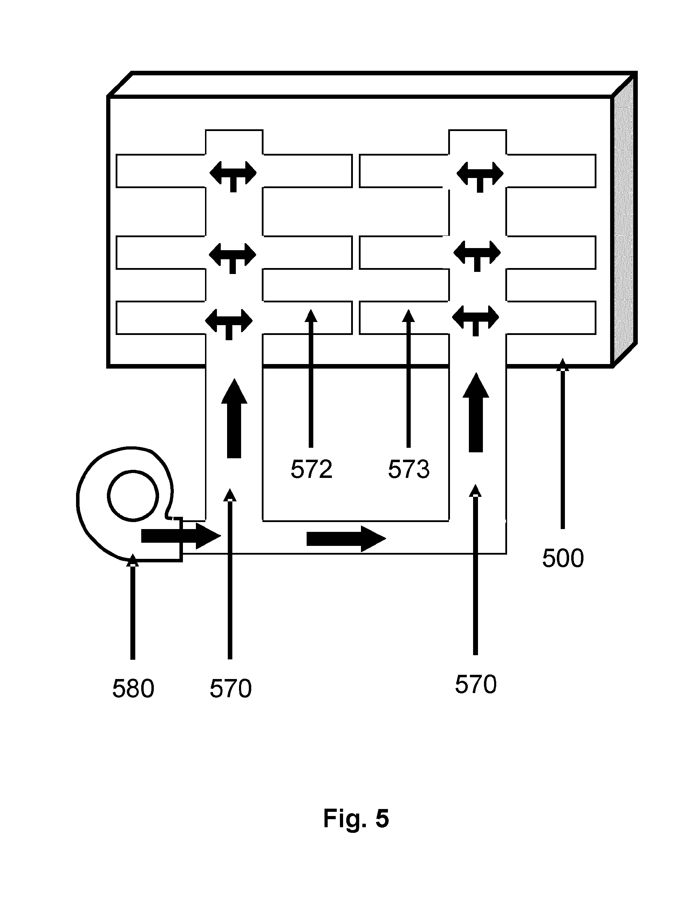

Figure 5 shows a cross-section in top view of an apparatus according to the invention. Therein side ducts (572, 573) are shown, as well as main or central ducts (570). Side ducts extend outwards from main ducts towards a side of a tray uses, or towards each others. A remaining space is about 5 cm in each case. The flow of air is shown by thick black arrows.

Further a fan (580), such as a Multifan CH2F30, is supplied. The fan provides a maximum of 3000 m³/h of gas (air), which is more than sufficient for a tray of 5.4 m² as is used in the example. Typically only a fraction of the available capacity is used, such as 500 m³/h. The air pressure was kept at about 500 Pa, which is considered relatively low, but more than sufficient for the objective of the present invention. Also a Multifan speed controller was used.

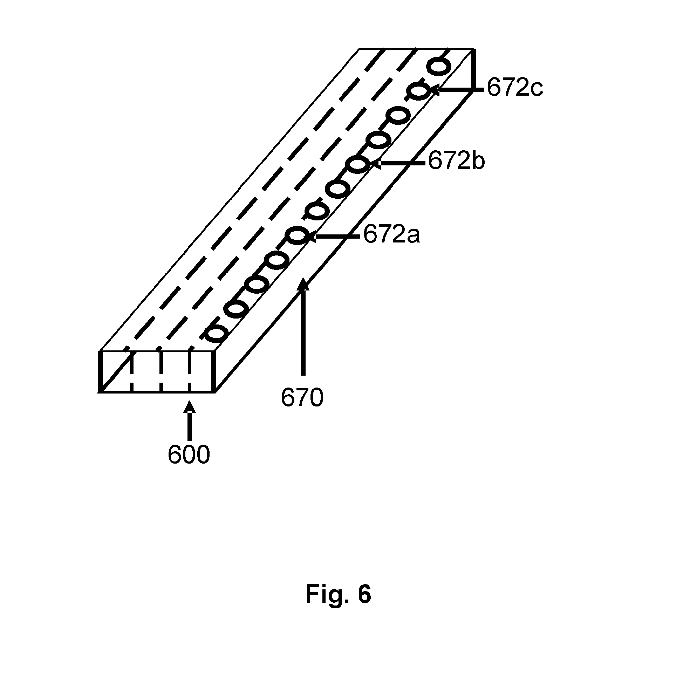

Figure 6 shows part of an apparatus according to the invention. Therein an aerated floor is shown. The floor (600) comprises sections (670) provides with releases (672a, 672b, 672c, etc.), specifically openings. As such a tray can be provided having ducts and openings integrated into a floor thereof. For construction purposes such a set-up provides advantages.

## Claims

1. Apparatus for harvesting mushrooms, comprising
a container, which container comprises
a first layer, comprising substrate, such as compost,
a second covering layer, preferably comprising pasteurized material, such as peat, a means for actively providing a gas, preferably air, to said first and/or second layer,
wherein said means comprise a fan and one or more ducts, which one or more ducts are in communication with the fan and the first and/or second layer.

2. Apparatus according to claim 1, wherein the one or more ducts further comprise one or more releases, which one or more releases are located in the first and/or second layer.

3. Apparatus according to any or more of the preceding claims, wherein the one or more releases are chosen from the group consisting openings, membranes, and combinations thereof, which membranes are permeable to the gas.

4. Apparatus according to any or more of the preceding claims, wherein the one or more releases are substantially distributed evenly in space in the first and/or in the second layer.

5. Apparatus according to any or more of the preceding claims, wherein 1-25 releases is/are present per meter duct, preferably 2-20 per meter duct, such as 10 per meter duct.

6. Apparatus according to any or more of the preceding claims, wherein the duct comprises one or more central ducts and/or one or more side ducts, preferably 0.5-10 central ducts per meter, more preferably 1-5 central ducts per meter, such as 2 ducts per meter.

7. Apparatus according to any or more of the preceding claims, comprising preferably 5-25 side ducts per meter central duct, more preferably 8-20 side ducts per meter central duct, such as 10 side ducts per meter central duct.

8. Apparatus according to any or more of claims 3-7, wherein the one or more openings have a cross section of 0.1 mm - 10 mm, preferably from 0.3 mm - 5 mm, such as from 1 mm - 3 mm.

9. Apparatus according to any or more of claims 3-8, wherein one or more membranes have a cross section of 0.1 mm - 10 mm, preferably from 0.3 mm - 5 mm, such as from 1 mm - 3 mm.

10. Apparatus according to any or more of claims 3-9, wherein the one or more membranes have a pore diameter suitable for gas penetration, such as from 0.1 nm - 50 nm, preferably from 1 nm - 20 nm.

11. Apparatus according to any or more of claims 3-10, wherein ducts are substantially formed of a membrane and/or suitable ceramics, such as for more than 50%, or more than 70%, or even more than 90%.

12. Method for harvesting mushrooms, comprising the steps of:
i) providing a container, which container comprises:
a) a first layer, comprising substrate, such as compost,
b) a second covering layer, preferably comprising pasteurized material, such as peat,
ii) ) providing means for actively providing a gas, preferably air, to said first and/or second layer, wherein said means comprise a fan and one or more ducts, which one or more ducts are in communication with the fan and the first and/or second layer;
iii) providing a gas, preferably air, to said first and/or second layer.

13. Method for harvesting mushrooms according to claim 12, wherein one or more of temperature, oxygen pressure, relative humidity of first and/or second layer, start of mushroom growth, end of mushroom growth, use of energy, growth of mushrooms, and moment of harvesting is controlled.
